(19) Europäisches Patentamt European Patent Office Office européen des brevets

(11) **EP 2 312 228 B1**

(12) **EUROPEAN PATENT SPECIFICATION**

(45) Date of publication and mention
of the grant of the patent:
**16.01.2019 Bulletin 2019/03**

(51) Int Cl.:
*F24F 5/00* (2006.01) *F25B 1/00* (2006.01)
*F25B 5/02* (2006.01) *F25B 29/00* (2006.01)
*F24F 11/00* (2018.01) *F25B 25/00* (2006.01)
*F25B 5/04* (2006.01) *F25B 13/00* (2006.01)
*F24F 3/06* (2006.01) *F24F 11/30* (2018.01)
*F24F 11/62* (2018.01) *F24F 11/83* (2018.01)
*F24F 11/89* (2018.01)

(21) Application number: **08877713.1**

(22) Date of filing: **29.10.2008**

(86) International application number:
**PCT/JP2008/069603**

(87) International publication number:
**WO 2010/050001 (06.05.2010 Gazette 2010/18)**

(54) **AIR CONDITIONER**

KLIMAANLAGE

CONDITIONNEUR D'AIR

(84) Designated Contracting States:
**AT BE BG CH CY CZ DE DK EE ES FI FR GB GR
HR HU IE IS IT LI LT LU LV MC MT NL NO PL PT
RO SE SI SK TR**

(43) Date of publication of application:
**20.04.2011 Bulletin 2011/16**

(73) Proprietor: **Mitsubishi Electric Corporation
Tokyo 100-8310 (JP)**

(72) Inventors:
• **YAMASHITA, Koji**
**Tokyo 100-8310 (JP)**
• **MORIMOTO, Hiroyuki**
**Tokyo 100-8310 (JP)**
• **MOTOMURA, Yuji**
**Tokyo 100-8310 (JP)**
• **HATOMURA, Takeshi**
**Tokyo 100-8310 (JP)**

(74) Representative: **Pfenning, Meinig & Partner mbB
Patent- und Rechtsanwälte
Theresienhöhe 11a
80339 München (DE)**

(56) References cited:
EP-A2- 1 113 233     JP-A- 3 017 475
JP-A- 10 089 783     JP-A- 2003 343 936
JP-A- 2003 343 936     JP-A- 2005 140 444
JP-A- 2005 308 375

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

The present invention relates to an air-conditioning apparatus such as a multiple air conditioner for buildings.

Background Art

In the multiple air conditioner, which is a conventional air-conditioning apparatus, cooling energy or heating energy is delivered indoors by circulating a refrigerant between an outdoor unit, which is a heat source apparatus installed outdoors, and an indoor unit installed indoors and cooling or heating has been performed. As for the refrigerant, an HFC (hydrofluorocarbon) refrigerant is used a lot and the air-conditioning apparatus using a natural refrigerant such as $CO_2$ is proposed.

In a chiller, which is another conventional air conditioning apparatus, cooling energy or heating energy is generated in a heat source apparatus disposed outdoors, cooling energy or heating energy is transferred to a heat medium such as water and an anti-freezing liquid by a heat exchanger disposed in an outdoor unit, and cooling or heating is performed by conveying the heat medium to a fan coil unit, a panel heater and the like, which are indoor units (Refer to Patent Literature 1, for example).

Patent Literature 1: Japanese Unexamined Patent Application Publication No. 2003-343936

Summary of Invention

Technical Problem

In the conventional air-conditioning apparatus, since the high-pressure refrigerant is transferred into the indoor unit and utilized, an environment in the room is deteriorated when the refrigerant leaks indoors disadvantageously. In the case of the chiller, since heat exchange is performed outdoors between the refrigerant and water and the water subjected to heat exchange is carried to the indoor unit, conveying power of water is extremely large and non-energy saving, disadvantageously.

The present invention is made to solve the above-mentioned problems and its purpose is to obtain an environment-friendly air-conditioning apparatus having a small conveying power, using water or the like in an indoor unit side.

Solution to Problem

The problem is solved by an air-conditioning apparatus according to claim 1, the dependent claims 2 to 7 represent preferred embodiments.

The air-conditioning apparatus according to the present invention comprises: at least one intermediate heat exchanger that exchanges heat between a refrigerant and a heat medium that is different from the refrigerant; a refrigeration cycle in which a compressor, a heat source side exchanges heat, at least one expansion valve, and a refrigerant side flow path of the intermediate heat exchanger are connected via piping through which the refrigerant flows; and a heat medium circulation circuit in which the heat medium side flow path of the intermediate heat exchanger, and a use side heat exchanger are connected via piping through which the heat medium flows.

The heat source side heat exchanger, the intermediate heat exchanger, and the use side heat exchanger are separately formed respectively and are preferably adapted to be disposed at separate locations from each other.

A flow path switching valve that switches the flow path is preferably provided with each of inlet side and outlet side of heat medium side flow path of the use side heat exchanger so as to connect with the intermediate heat exchanger.

A pump that circulates the heat medium in the heat medium circulation circuit is installed preferably either at a flow path between the use side heat exchanger and the flow path switching valve disposed at the inlet side of the use side heat exchanger, or at the flow path between the use side heat exchanger and the flow path switching valve disposed at the outlet side of the use side heat exchanger.

The air-conditioning apparatus further comprises a flow meter that detects the flow amount of the heat medium flowed into said use side heat exchanger, capacity calculation means that calculates capacity exerted by said use side heat exchanger from a flow amount of the heat medium detected by said flow meter and detection temperatures of temperature sensors that detect a temperature of the heat medium flowing into said use side heat exchanger and a temperature of the heat medium flowed out from said use side heat exchanger, and control target value change means that changes a control target value of a condensing temperature and/or evaporating temperature of said refrigeration cycle based on values_calculated by said capacity calculation means, are provided. The air-conditioning apparatus is provided with a temperature sensor preferably in a flow path between the flow path switching valve disposed at a heat medium inlet side of the use side heat exchanger and the use side heat exchanger, and in the flow path between the flow path switching valve disposed at a heat medium outlet side of the use side heat exchanger and the use side heat exchanger, respectively.

The pump is controlled preferably so that the difference in the detection temperatures of the two temperature sensors approaches a predetermined target value to control the flow amount of the heat medium flowing into the use side heat exchanger.

Advantageous Effects of Invention

Since no high-pressure refrigerant is transferred to the use side heat exchanger constituting the indoor unit, the air-conditioning apparatus according to the present invention can inhibit the refrigerant from entering the space to be air-conditioned even when the refrigerant leaks from piping, securing safety. The heat source side heat exchanger, the intermediate heat exchanger, and the use side heat exchanger are separately formed respectively, and are adapted to be disposed at separate locations from each other, therefore, conveying force of the heat medium can be made small to contribute to energy saving.

Brief Description of Drawings

Fig. 1 is an entire constitution diagram of an air-conditioning apparatus according to Embodiment 1 of the present invention.
Fig. 2 is another entire constitution diagram of the air-conditioning apparatus according to Embodiment 1 of the present invention.
Fig. 3 is a circuit diagram for a refrigerant and a heat medium of the air-conditioning apparatus according to Embodiment 1 of the present invention.
Fig. 4 is a circuit diagram showing the refrigerant and the heat medium flow at the time of cooling only operation.
Fig. 5 is a circuit diagram showing the refrigerant and the heat medium flow at the time of heating only operation.
Fig. 6 is a circuit diagram showing the refrigerant and the heat medium flow at the time of cooling-main operation.
Fig. 7 is a circuit diagram showing the refrigerant and the heat medium flow at the time of heating-main operation.
Fig. 8 is a circuit diagram for the refrigerant and the heat medium of the air-conditioning apparatus according to Embodiment 2 of the present invention.
Fig. 9 is a flow chart showing heat medium flow amount control of the air-conditioning apparatus.
Fig. 10 is a flow chart showing pump ON/OFF control of the air-conditioning apparatus.
Fig. 11 is a flow chart showing control for changing a control target value of a condensing temperature and/or an evaporating temperature of a refrigeration cycle of the air-conditioning apparatus.

Reference Signs List

| 1 | heat source apparatus (outdoor unit) |
| 2 | indoor unit |
| 3 | relay unit |
| 3a | main relay unit |
| 3b(1), 3b(2) | sub relay unit |
| 4 | refrigerant pipeline |
| 5 | heat medium pipeline |
| 6 | outdoor space |
| 7 | indoor space |
| 8 | non-air conditioned space |
| 9 | structures such as buildings |
| 10 | compressor |
| 11 | four-way valve |
| 12 | heat source side heat exchanger |
| 13a, 13b, 13c, 13d | check valve |
| 14 | gas-liquid separator |
| 15a, 15b | intermediate heat exchanger |
| 16a, 16b, 16c, a6d, 16e, 16f | expansion valve |

| 17 | accumulator |
| 21a, 21b, 21c, 21d | pump |
| 22a, 22b, 22c, 22d | flow path switching valve |
| 23a, 23b, 23c, 23d | flow path switching valve |
| 26a, 26b, 26c, 26d | use side heat exchanger |
| 31a, 31b | first temperature sensor |
| 32a, 32b | second temperature sensor |
| 33a, 33b, 33c, 33d | third temperature sensor |
| 34a, 34b, 34c, 34d | fourth temperature sensor |
| 35 | fifth temperature sensor |
| 36 | pressure sensor |
| 37 | sixth temperature sensor |
| 38 | seventh temperature sensor |
| 41a, 41b, 41c, 41d | flow meter |

Description of Embodiments

Detailed descriptions will be given to embodiments of the present invention.

Embodiment 1

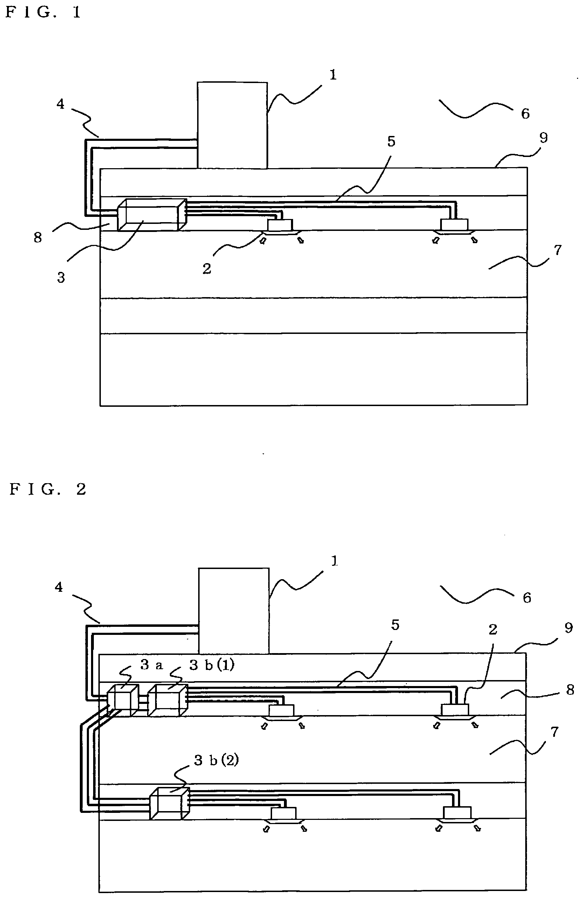

Figs. 1 and 2 are an entire constitution diagram of an air-conditioning apparatus according to Embodiment 1 of the present invention. The air-conditioning apparatus includes a heat source apparatus (outdoor unit) 1, an indoor unit 2 subjected to air conditioning of indoors, and a relay unit 3 that is separated from the outdoor unit 1 to be disposed in a non-air conditioned space 8. The heat source apparatus 1 and the relay unit 3 are connected by refrigerant pipeline 4 and a refrigerant (a primary medium) flows therein. The relay unit 3 and the indoor unit 2 are connected by heat medium pipeline 5 and a heat medium (a secondary medium) such as water and an anti-freezing liquid flows therein. The relay unit 3 exchanges heat between the refrigerant sent from the heat source apparatus 1 and the heat medium sent from the indoor unit 2.

The heat source apparatus 1 is usually disposed in an outdoor space 6, which is an external space of structures 9 such as buildings. The indoor unit 2 is disposed in a manner capable of conveying heated or cooled air to an indoor space 7 such as a living room inside of structures 9 such as buildings. The relay unit 3 is housed in a housing different from the heat source apparatus 1 and the indoor unit 2, being adapted to be capable of being disposed at a location different from the outdoor space 6 and the indoor space 7 via the refrigerant pipeline 4 and the heat medium pipeline 5. In Fig. 1, although the relay unit 3 is disposed inside the building 9, in a non-air conditioned space 8 such as under the roof, which is a space different from the indoor space 7. The relay unit 3 can be disposed in a common use space, where an elevator is installed.

The heat source apparatus 1 and the relay unit 3 are configured so as to be connected using two refrigerant pipeline 4. The relay unit 3 and each indoor unit 2 are connected using two heat medium pipeline 5 respectively. Connection using two pipelines facilitates the construction of the air-conditioning apparatus.

Fig. 2 shows a case where a plurality of relay units 3 is provided. That is, the relay unit 3 is divided into one main relay unit 3a and two sub relay units 3b (1) and 3b (2) derived therefrom. Accordingly, a plurality of sub relay units 3 can be connected with one main relay unit 3. In this configuration, there are three connection pipelines between the main relay unit 3a and the sub relay units 3b.

In Figs. 1 and 2, although the indoor unit 2 is shown with a ceiling cassette type being an example, it is not limited thereto. Any type such as a ceiling-concealed type and a ceiling-suspended type will be allowable as long as heated or cooled air can be blown out into the indoor space 7 directly or through a duct.

Although the heat source apparatus 1 is explained with the case of being disposed in the outdoor space 6 outside the building 9 being an example, it is not limited thereto. For example, the heat source apparatus 1 may be disposed in a surrounded space like a machine room near a ventilating opening. The heat source apparatus 1 may be disposed inside the building 9 to discharge exhaust heat to outside of the building 9 through an exhaust duct. A water-cooled type heat source apparatus may be employed to be disposed in the building 9.

The relay unit 3 may be disposed near the heat source apparatus 1, which may be against energy saving.

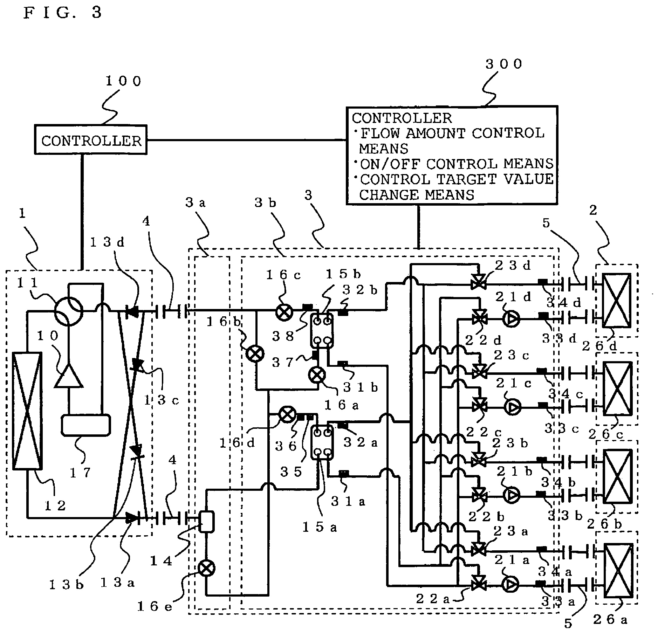

Next, descriptions will be given to detailed configuration of the above air-conditioning apparatus. Fig. 3 is a circuit diagram for the refrigerant and the heat medium of the air-conditioning apparatus according to Embodiment 1 of the present invention. The air-conditioning apparatus, as shown in Fig. 3, has a heat source apparatus 1, an indoor unit 2, and a relay unit 3. The heat source apparatus 1 includes a compressor 10, a four-way valve 11, a heat source side heat exchanger 12, check valves 13a, 13b, 13c, 13d, and an accumulator 17. The indoor unit 2 includes use side heat exchangers 26a to 26d. The relay unit 3 includes a main relay unit 3a and a sub relay unit 3b. The main relay unit 3a includes a gas-liquid separator 14 to separate a gas phase and a liquid phase of the refrigerant and an expansion valve 16e (an electronic expansion valve, for example).

The sub relay unit 3b includes intermediate heat exchangers 15a and 15b, expansion valves (electronic expansion valves, for example) 16a to 16d, pumps 21a and 21b, and flow path switching valves 22a to 22d and 23a to 23d such as a three-way valve. The flow path switching valves 22a to 22d and 23a to 23d are installed at inlet side flow path and outlet side flow path of each use side heat exchanger 26a to 26d, correspondingly. The flow path switching valves 22a to 22d switch outlet side flow paths among plurally disposed intermediate heat exchangers. The flow path switching valves 23a to 23d switch inlet side flow paths among them. In this example, the flow path switching valves 22a to 22d perform operations to switch outlet side flow paths between the intermediate heat exchangers 15a and 15b, and the flow path switching valves 23a to 23d perform operations to switch inlet side flow paths between the intermediate heat exchangers 15a and 15b.

The pumps 21a to 21d are disposed between each use side heat exchanger 26a to 26d and the flow path switching valves 22a to 22d at the inlet side thereof. The pumps 21a to 21d may be disposed between the use side heat exchangers 26a to 26d and the flow path switching valves 23a to 23d at the outlet side thereof.

The sub relay unit 3b further includes temperature sensors and pressure sensors as follows:

* the temperature sensors (first temperature sensors) 31a and 31b to detect the outlet temperature of the heat medium of the intermediate heat exchangers 15a and 15b;

* the temperature sensors (second temperature sensors) 32a and 32b to detect the inlet temperature of the heat medium of the intermediate heat exchangers 15a and 15b;

* the temperature sensors (third temperature sensors) 33a to 33d to detect the inlet temperature of the heat medium of the use side heat exchangers 26a to 26d;

* the temperature sensors (fourth temperature sensors) 34a and 34b to detect the outlet temperature of the heat medium of the use side heat exchangers 26a to 26d;

* the temperature sensors (fifth temperature sensors) 35 to detect the refrigerant outlet temperature of the intermediate heat exchanger 15a;

* the pressure sensor 36 to detect the refrigerant outlet pressure of the intermediate heat exchanger 15a;

* the temperature sensor (a sixth temperature sensor) 37 to detect the refrigerant inlet temperature of the intermediate heat exchanger 15b; and

* the temperature sensor (a seventh temperature sensor) 38 to detect the refrigerant outlet temperature of the intermediate heat exchanger 15b.

These temperature sensors and pressure sensors can employ a variety of thermometers or temperature sensors, and a variety of pressure gauge or pressure sensors.

The compressor 10, the four-way valve 11, the heat source side heat exchanger 12, the check valves 13a, 13b, 13c, 13d, the gas-liquid separator 14, the expansion valves 16a to 16d, the intermediate heat exchangers 15a and 15b, and the accumulator 17 configure a refrigeration cycle.

The intermediate heat exchangers 15a, the flow path switching valves 22a to 22d, the pumps 21a to 21d, the use side heat exchangers 26a to 26d, and the flow path switching valves 23a to 23d configure a heat medium circulation circuit. In the same way, the intermediate heat exchangers 15b, the flow path switching valves 22a to 22d, the pumps 21a to 21d, the use side heat exchangers 26a to 26d, and the flow path switching valves 23a to 23d configure a heat medium circulation circuit.

As shown in figures, a set including one use side heat exchanger, a pair of flow path switching valves corresponding to the inlet/outlet of the use side heat exchanger, and one pump is plurally provided with the intermediate heat exchangers 15a and 15b in parallel, each configuring a heat medium circulation circuit.

In the heat source apparatus 1, a controller 100 is provided that controls equipment constituting thereof to make the heat source apparatus 1 perform operations as what is called an outdoor unit. In the relay unit 3, a controller 300 is provided that controls equipment constituting thereof and has means to perform various operations to be mentioned later. These controllers 100 and 300 are composed of such as a microcomputer to be communicably connected with each other. Next, operations of each operation mode of the above air-conditioning apparatus will be explained.

<Cooling only operation>

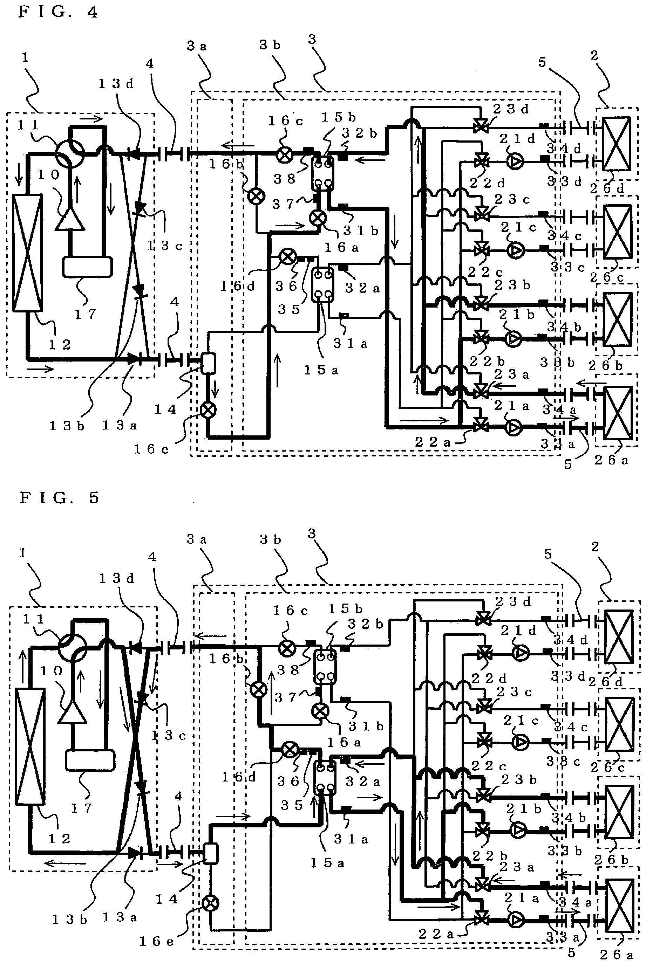

Fig. 4 is a circuit diagram showing a refrigerant and a heat medium flow at the time of cooling only operation. Thick lines in the circuit show their flows. In the cooling only operation, the refrigerant is compressed by the compressor 10, turned into a high-temperature high-pressure gas refrigerant to be introduced into the heat source side heat exchanger 12 via the four-way valve 11. The refrigerant is condensed and liquefied there, passes through the check valve 13a, and flowed out of the heat source apparatus 1 into the relay unit 3 via the refrigerant pipeline 4. In the relay unit 3, the refrigerant enters the gas-liquid separator 14 to be guided into the intermediate heat exchanger 15b via the expansion valves 16e and 16a. Thereby, the refrigerant is expanded by the expansion valve 16a to turn into a low-temperature low-pressure two-phase refrigerant and the intermediate heat exchanger 15b operates as an evaporator. The refrigerant flowed out the intermediate heat exchanger 15b turns into a low-temperature low-pressure gas refrigerant and flows out of the relay unit 3 via the expansion valve 16c to flow into the heat source apparatus 1 again via the refrigerant pipeline 4. In the heat source apparatus 1, the refrigerant passes through the check valve 13d to be sucked into the compressor 10 via the four-way valve 11 and the accumulator 17. Then, the expansion valves 16b and 16d have an opening-degree small enough for the refrigerant not to flow and the expansion valve 16c is made to be a full-open state so as not to cause a pressure loss.

Next, descriptions will be given to motion of the secondary side heat medium (water, anti-freezing liquid, etc.). The heat medium, which is a secondary medium, receives cooling energy from the refrigerant, which is a primary medium, in the intermediate heat exchanger 15b and cooled and sucked by the pumps 21a to 21d via the flow path switching valves 22a to 22d to flow into the use side heat exchangers 26a to 26d. There, the heat medium performs heat exchange with the air to cover an air-conditioning load needed indoors to flow into the intermediate heat exchanger 15b again through the flow path switching valves 23a to 23d. In addition, the air-conditioning load required indoors can be covered by controlling a rotation speed of the pumps 21a to 21d so that a difference in the detection temperature between the third temperature sensors 33a to 33d and the fourth temperature sensors 34a to 34d is maintained to be a predetermined target value.

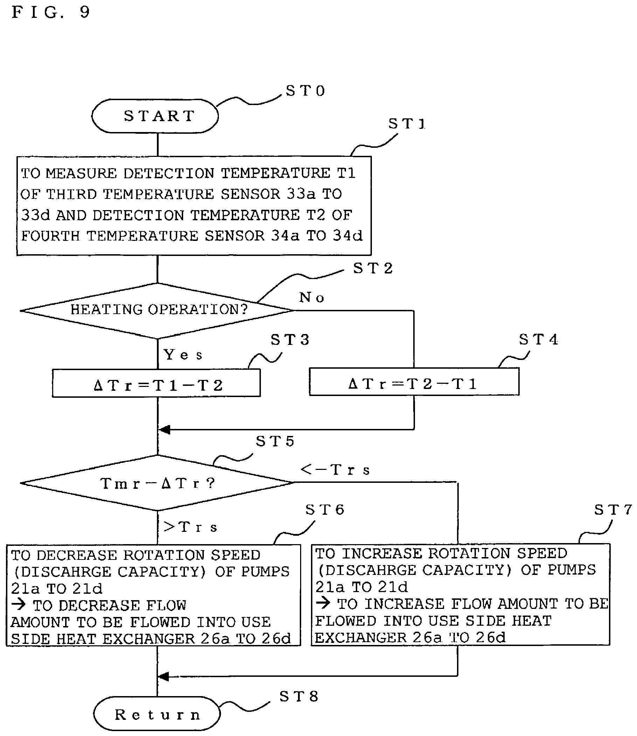

Heat medium flow amount control operation of the controller 300 will be explained based on Fig. 9. Fig. 9 is a flow chart corresponding to an operation of a single indoor unit 2. If there is a plurality of indoor units 2, the operation corresponding thereto will be performed for each indoor unit.

After the processing starts (ST0), the controller 300 takes in the detection temperatures T1 of the third temperature sensors 33a to 33d and the detection temperatures T2 of the fourth temperature sensors 34a to 34d (ST1). When the use side heat exchangers 26a to 26d are in heating operation, $\Delta Tr$ is defined as a value obtained by subtracting T2 from T1 (ST2, ST3). In the case of cooling operation and defrosting operation other than heating operation, $\Delta Tr$ is defined as a value obtained by subtracting T1 from T2 (ST2, ST4).

Next, the controller 300 compares the use side heat exchanger outlet/inlet temperature difference $\Delta Tr$ with a predetermined control target value Tmr (ST5). When the value obtained by subtracting Tmr from $\Delta Tr$ is larger than a safety range Trs, the rotation speed (discharge capacity) of the pumps 21a to 21d is reduced, that is, the flow amount to be flowed into the use side heat exchangers 26a to 26d is reduced (ST6). On the other hand, when the value obtained by subtracting Tmr from $\Delta Tr$ is smaller than the safety range Trs, the rotation speed (discharge capacity) of the pumps 21a to 21d is increased, that is, the flow amount to be flowed into the use side heat exchangers 26a to 26d is increased (ST7). Such a series of processing is completed (ST8), and control is performed at the next control timing.

For example, when the control target value Tmr is 5 degrees C and the safety range Trs is 1 degree C in the case of cooling operation, if the use side heat exchanger outlet/inlet temperature difference $\Delta Tr$ is 3 degrees C, the rotation speed (discharge capacity) of the pumps 21a to 21d is controlled so as to reduce the flow amount to be flowed into the use side heat exchangers 26a to 26d. If the use side heat exchanger outlet/inlet temperature difference $\Delta Tr$ is 7 degrees C, the rotation speed (discharge capacity) of the pumps 21a to 21d is controlled so as to increase the flow amount to be flowed into the use side heat exchangers 26a to 26d to make the use side heat exchanger outlet/inlet temperature difference $\Delta Tr$ approach the control target value. In addition, the safety range Trs may not be provided (Trs = 0 degree C). However, when providing the safety range, the number of frequency change of the pumps 21a to 21d decreases and life of the pump is extended.

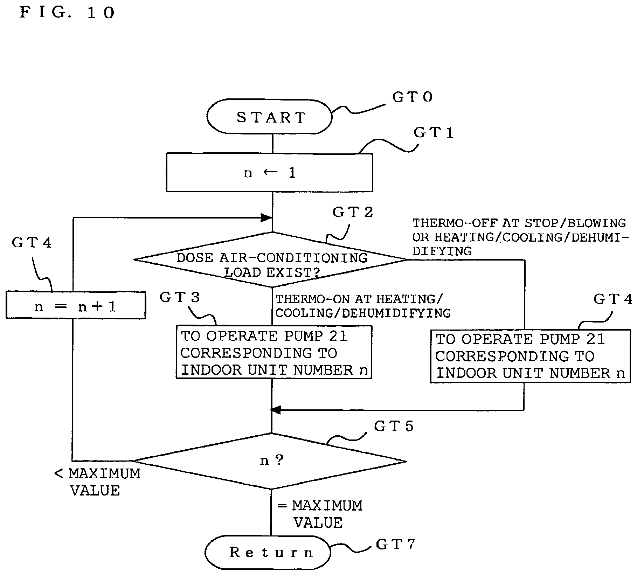

Fig. 10 is a flow chart corresponding to the operation among a plurality of the indoor units 2. As shown in the flow chart of Fig. 10, the controller 300 numbers 1 to n to the n units of the installed indoor units and identifies air-conditioning load conditions of all the indoor units (use side heat exchanger) in order (GT1, GT2, GT5, GT6). Then, the controller 300 makes the pump 21 corresponding to the use side heat exchanger 26 having a air-conditioning load such as heating, cooling, and dehumidifying to operate (GT3), and makes the pump 21 corresponding to the use side heat exchanger 26 having no air-conditioning load such as the case of thermo-off state in stop, blowing, heating, cooling, and dehumidifying to stop (GT4). That is, since there is no need to flow the heat medium to the use side heat exchanger (including thermo-off) having no air-conditioning load such as heating, cooling, dehumidifying, the pumps 21a to 21d corresponding to the relevant use side heat exchangers 26a to 26d are stopped. In Fig. 4, while in the use side heat exchangers 26a and 26b, the heat medium is made to flow because of the air-conditioning load, in the use side heat exchangers 26c and 26d, there is no air-conditioning load and corresponding pumps 21c and 21d are stopped.

<Heating only operation>

Fig. 5 is a circuit diagram showing a refrigerant and a heat medium flow at the time of heating only operation. Thick lines in the circuit diagram show their flows. In the heating only operation, the refrigerant is compressed by the compressor 10, turns into a high-temperature high-pressure gas refrigerant, passes through the check valve 13b via the four-way valve 11, and flows out of the heat source apparatus 1 via the check valve 13b to flow into the relay unit 3 via the refrigerant pipeline 4. In the relay unit 3, the refrigerant is introduced into the intermediate heat exchanger 15a through the gas-liquid separator 14, condensed and liquefied in the intermediate heat exchanger 15a to flow out of the relay unit 3 through the expansion valves 16d and 16b. Then, the refrigerant is expanded by the expansion valve 16b, turned into a low-temperature low-pressure two-phase refrigerant, and flows into the heat source apparatus 1 again through the refrigerant pipeline 4. In the heat source apparatus 1, the refrigerant is introduced into the heat source side heat exchanger 12 through the check valve 13c. The heat source side heat exchanger 12 acts as an evaporator. The refrigerant turns into a low-temperature low-pressure gas refrigerant to be sucked into the compressor 10 via the four-way valve 11 and the accumulator 17. Then, the expansion valve 16a or 16c and the expansion valve 16e are made to have a small opening-degree so that no refrigerant flow therethrough.

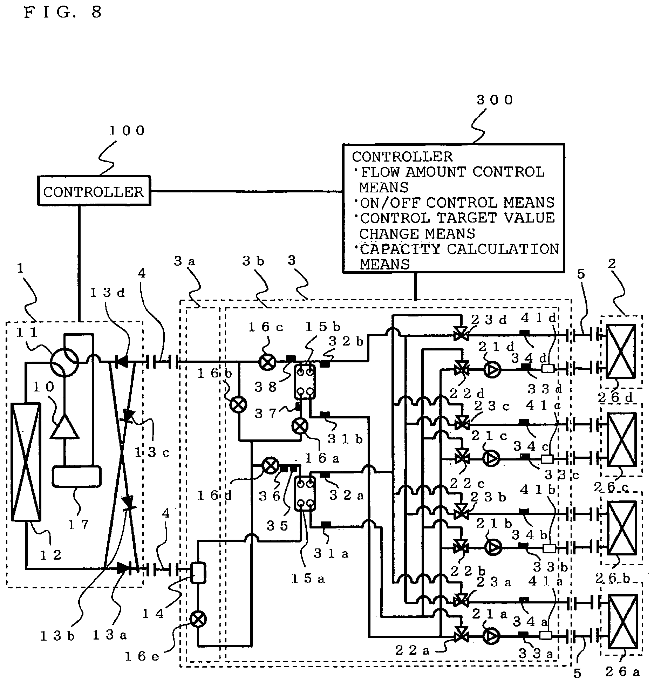

Next, motion of the secondary side heat medium (water, anti-freezing liquid, etc.) will be explained. The heat medium, which is a secondary medium, receives heating energy from the refrigerant, which is a primary medium, in the intermediate heat exchanger 15a, being heated and sucked into the pumps 21a to 21d via the flow path switching valves 22a to 22d to flow into the use side heat exchanger 26a to 26d. Then, the heat medium performs heat exchange with the air, covers the air-conditioning load needed indoors to flow into the intermediate heat exchanger 15a again through the flow path switching valves 23a to 23d. In addition, the air-conditioning load needed indoors can be covered by controlling the rotation speed of the pumps 21a to 21d such that the difference in the temperature between the third temperature sensors 33a to 33d and the fourth temperature sensors 34a to 34d maintains a target value as shown by Fig. 8.

Since there is no need to flow the heat medium to the use side heat exchanger (including thermo-off) having no air-conditioning load such as heating, cooling, and dehumidifying, the pump corresponding to the use side heat exchanger is stopped. In Fig. 5, while in the use side heat exchangers 26a and 26b, the heat medium is made to flow because of a air-conditioning load, in the use side heat exchangers 26c and 26d there is no air-conditioning load and corresponding pumps 21c and 21d are stopped.

<Cooling-main operation>

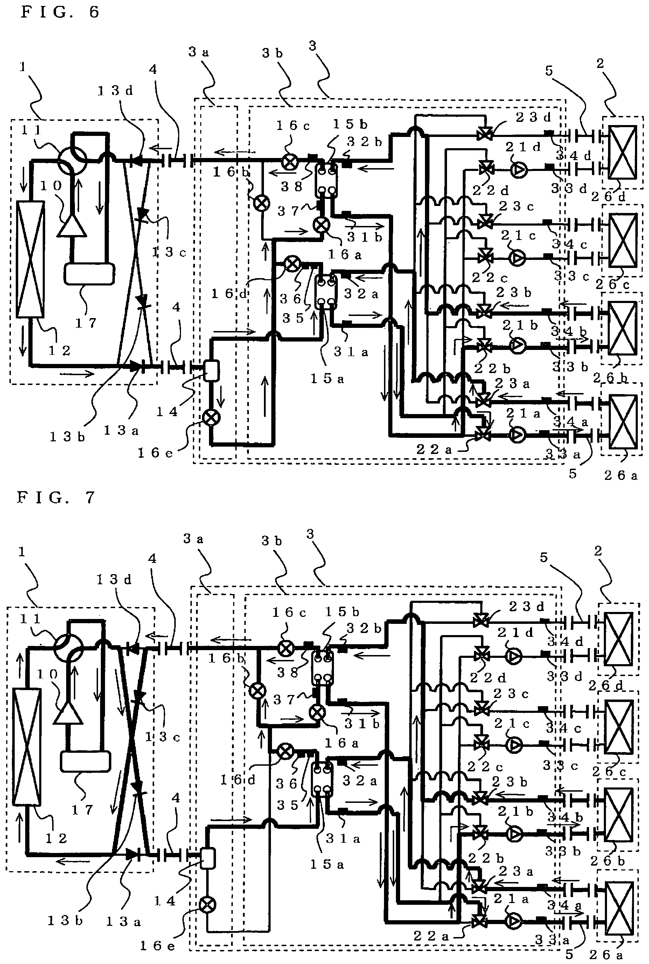

Fig. 6 is a circuit diagram showing a refrigerant and a heat medium flow at the time of cooling-main operation. Thick lines in the circuit diagram show their flows . In the cooling-main operation, the refrigerant is compressed by the compressor 10, turned into a high-temperature high-pressure gas refrigerant to be guided into the heat source side heat exchanger 12 via the four-way valve 11. There, the gas-state refrigerant is condensed to turn into a two-phase refrigerant, flows out of the heat source side heat exchanger 12 in the two-phase state, flows out of the heat source apparatus 1 via the check valve 13a, and flows into the relay unit 3 via the refrigerant pipeline 4. In the relay unit 3, the refrigerant enters the gas-liquid separator 14 and a gas refrigerant and a liquid refrigerant in the two-phase refrigerant are separated. The gas refrigerant is guided into the intermediate heat exchanger 15a, condensed and liquefied therein to pass through the expansion valve 16d. Meanwhile, the liquid refrigerant separated in the gas-liquid separator 14 is flowed to the expansion valve 16e, joined with the liquid refrigerant condensed and liquefied in the intermediate heat exchanger 15a and passed through the expansion valve 16d, and guided to the intermediate heat exchanger 15b via the expansion valve 16a. Then, the refrigerant is expanded by the expansion valve 16a to turn into a low-temperature low-pressure two-phase refrigerant and the intermediate heat exchanger 15b operates as an evaporator. The refrigerant flowed out of the intermediate heat exchanger 15b turns into a low-temperature low-pressure gas refrigerant and flows out of the relay unit 3 via the expansion valve 16c to flow into the heat source apparatus 1 again via the refrigerant pipeline 4. In the heat source apparatus 1, the refrigerant passes through the check valve 13d to be sucked into the compressor 10 via the four-way valve 11 and the accumulator 17. Then, the expansion valve 16b has an opening-degree small enough for the refrigerant not to flow and the expansion valve 16c is made to be a full open state so as to cause no pressure loss.

Next, descriptions will be given to motion of the secondary side heat medium (water, anti-freezing liquid, etc.). The heat medium, which is a secondary medium, receives heating energy from the refrigerant, which is a primary medium, in the intermediate heat exchanger 15a to be heated, receives cooling energy from the refrigerant in the intermediate heat exchanger 15b to be cooled, and is made to flow in each heat medium circulation circuit. Then, the heat medium is sucked into the pumps 21a to 21d via the flow path switching valves 22a to 22d to flow into the use side heat exchangers 26a to 26d. There, the heat medium exchanges heat with the air to cover the air-conditioning load needed indoors to pass through the flow path switching valves 23a to 23d. While the heated heat medium flows into the intermediate heat exchanger 15a, the cooled heat medium flows into the intermediate heat exchanger 15b. Meanwhile, the heated heat medium and the cooled heat medium are guided to the use side heat exchangers 26a to 26d having the heating load and the cooling load, respectively, without being mixed through the operation of the flow path switching valves 22a to 22d and 23a to 23d.

The air-conditioning load needed indoors can be covered by controlling the rotation speed of the pumps 21a to 21d so as to maintain the temperature difference between the third temperature sensors 33a to 33d and the fourth temperature sensors 34a to 34d at a target value.

Fig. 6 shows a state in which a heating load is generated in the use side heat exchanger 26a and a cooling load is generated in the use side heat exchanger 26b, respectively.

Since there is no need to flow the heat medium to the use side heat exchanger (including thermo-off) having no air-conditioning load such as heating, cooling, and dehumidifying, the pump corresponding to the use side heat exchanger is stopped. In Fig. 6, while in the use side heat exchangers 26a and 26b, the heat medium is made to flow because of the air-conditioning load, in the use side heat exchangers 26c and 26d, there is no air-conditioning load and corresponding pumps 21c and 21d are stopped.

<Heating-main operation>

Fig. 7 is a circuit diagram showing a refrigerant and a heat medium flow at the time of heating-main operation. Thick lines in the circuit diagram show their flows. In the heating-main operation, the refrigerant is compressed by the compressor 10, turns into a high-temperature high-pressure gas refrigerant, passes through the check valve 13b via the four-way valve 11, and flows out of the heat source apparatus 1 to flow into the relay unit 3 via the refrigerant pipeline 4. In the relay unit 3, the refrigerant is introduced into the intermediate heat exchanger 15a through the gas-liquid separator 14, and condensed and liquefied in the intermediate heat exchanger 15a. Thereafter, the refrigerant passing through the expansion valve 16d is branched into flow paths through the expansion valve 16a and the expansion valve 16b. The refrigerant passing through the expansion valve 16a is expanded by the expansion valve 16a to turn into a low-temperature low-pressure two-phase refrigerant and flows into the intermediate heat exchanger 15b. The intermediate heat exchanger 15b operates as an evaporator. The refrigerant flowed out of the intermediate heat exchanger 15b evaporates to turn into a gas refrigerant and passes through the expansion valve 16c. On the other hand, the refrigerant passing through the expansion valve 16b is expanded by the expansion valve 16b to turn into a low-temperature low-pressure two-phase refrigerant, and merges with the refrigerant passing through the intermediate heat exchanger 15b and the expansion valve 16c to turn into a low-temperature low-pressure refrigerant having larger dryness. Then, the merged refrigerant flows out of the relay unit 3 to flow into the heat source apparatus 1 again through the refrigerant pipeline 4. In the heat source apparatus 1, the refrigerant passes through the check valve 13c to be guided into the heat source side heat exchanger 12. The heat source side heat exchanger 12 operates as an evaporator and the low-temperature low-pressure two-phase refrigerant is evaporated there into a gas refrigerant and sucked into the compressor 10 via the four-way valve 11 and the accumulator 17. Then, the expansion valve 16e is made to have a small opening-degree so that no refrigerant flows.

Next, descriptions will be given to motion of the secondary side heat medium (water, anti-freezing liquid, etc.). The heat medium, which is a secondary medium, receives heating energy from the refrigerant, which is a primary medium, in the intermediate heat exchanger 15a to be heated, receives cooling energy from the refrigerant in the intermediate heat exchanger 15b to be cooled, and is made to flow in each heat medium circulation circuit. Then, the heat medium is sucked into the pumps 21a to 21d via the flow path switching valves 22a to 22d to flow into the use side heat exchangers 26a to 26d. There, the heat medium exchanges heat with the air to cover the air-conditioning load needed indoors to pass through the flow path switching valves 23a to 23d. While the heated heat medium flows into the intermediate heat exchanger 15a, the cooled heat medium flows into the intermediate heat exchanger 15b. Meanwhile, the heated heat medium and the cooled heat medium are guided to the use side heat exchangers 26a to 26d having the heating load and the cooling load, respectively, without being mixed through the operation of the flow path switching valves 22a to 22d and 23a to 23d. The air-conditioning load required indoors can be covered by controlling the rotation speed of the pumps 21a to 21d so as to maintain the temperature difference between the third temperature sensors 33a to 33d and the fourth temperature sensors 34a to 34d at a target value.

Fig. 7 shows a state in which a heating load is generated in the use side heat exchanger 26a and a cooling load is generated in the use side heat exchanger 26b, respectively.

Since there is no need to flow the heat medium to the use side heat exchanger (including thermo-off) having no air-conditioning load such as heating, cooling, and dehumidifying, the pump corresponding to the use side heat exchanger is stopped. In Fig. 6, while in the use side heat exchangers 26a and 26b, the heat medium is made to flow because of the air-conditioning load, in the use side heat exchangers 26c and 26d, there is no air-conditioning load and corresponding pumps 21c and 241 are stopped.

As mentioned above, heating operation and cooling operation can be freely performed in each indoor unit 2 by switching the corresponding flow path switching valves 22a to 22d and 23a to 23d to the flow path connected to the intermediate heat exchanger 15a for heating when heating load is generated in the use side heat exchangers 26a to 26d, and by switching the corresponding flow path switching valves 22a to 22d and 23a to 23d to the flow path connected to the intermediate heat exchanger 15b for cooling when cooling load is generated in the use side heat exchangers 26a to 26d.

The flow path switching valves 22a to 22d and 23a to 23d may be anything that can switch flow paths such as a combination of two values to open and close two-way flow paths such as a stop valve as well as a three-way valve to switch three-way flow paths. The flow path switching valve may be configured by a combination of two of a stepping-motor-driven mixing valve to change the flow amount of three-way flow paths and an electronic expansion valve to change the flow amount of two-way flow paths. In that case, water hammer by a sudden opening/closing of the flow path can be prevented.

The air-conditioning load in the use side heat exchangers 26a to 26d is expressed by formula (1), being obtained by multiplying the flow rate, the density, the constant pressure specific heat of the heat medium and the difference in temperature of the heat medium at the inlet and outlet of the use side heat exchangers 26a to 26d, where Vw denoting the flow amount of the heat medium, pw the density of the heat medium, Cpw the constant pressure specific heat of the heat medium, Tw the temperature of the heat medium, a suffix "in" the value at the inlet of the heat medium of the use side heat exchangers 26a to 26d, a suffix "out" the value at the outlet of the heat medium of the use side heat exchangers 26a to 26d, respectively.

Formula 1

$$Q = V_w * (\rho_{win} * Cp_{win} * T_{win} - \rho_{wout} * Cp_{wout} * T_{wout}) \sim V_w * \rho_w * Cp_w * (T_{win} - T_{wout}) \qquad (1)$$

When the flow amount of the heat medium flowing to the use side heat exchangers 26a to 26d is fixed, the temperature difference at the inlet and the outlet of the heat medium changes according to changes in the air-conditioning load in the use side heat exchangers 26a to 26d. Therefore, with the temperature difference at the inlet and the outlet of the use side heat exchanger 26a to 26d being a target, it is possible to control the flow amount flowing to the use side heat exchangers 26a to 26d by controlling the rotation speed of the pumps 21a to 21d so that the temperature difference approaches a predetermined target value. The target value of the temperature difference at the inlet and the outlet of the use side heat exchangers 26a to 26d may be set at 5 degrees C, for example.

In Figs. 3 to 7, although descriptions are given to the case where the pumps 21a to 21d are installed at the upstream side of use side heat exchanger 26a to 26d, it may be installed at the downstream side thereof.

The heat medium flowed from each indoor unit in operation merges thereafter to flow into the intermediate heat exchanger 15a or 15b. Then, the heat exchange amount in the intermediate heat exchanger 15a or 15b is needed to be equal to the total of the heat amount of the load to be covered. If the heat exchange amount in the intermediate heat exchanger 15a or 15b is smaller than the heat amount of the load, the target temperature difference cannot be secured in each use side heat exchanger.

Then, a condensing temperature and/or an evaporating temperature may be controlled so as to secure required heat exchange amount in the intermediate heat exchanger 15a or 15b according to the amount of the air-conditioning load at the use side.

Thereby, when the air-conditioning load increases, the change can be followed. On the other hand, when the air-conditioning load is small, work load in the refrigeration cycle can be reduced as well as heat loss in the piping can be lowered by controlling the condensing temperature and/or the evaporating temperature in the refrigeration cycle, resulting in energy-saving.

The controller 300 judges whether these air-conditioning loads are small or large that is connected with the relay unit 3 in which the intermediate heat exchangers 15a and 15b and each temperature sensor are installed. On the other hand, control target values of the condensing temperature and the evaporating temperature are stored in the controller 100 connected with the heat source apparatus 1 in which the compressor 10 and the heat source side heat exchanger 12 are built-in. Then, the controllers 300 and 100 are made to be communicably connected and the control target value of the condensing temperature and/or the evaporating temperature is transmitted from the controller 300 to the controller 100 to change the control target value thereof stored in advance.

The air temperature in the living space is usually limited to approximately 20 to 27 degrees C. Therefore, if the heat medium outlet temperature in the intermediate heat exchangers 15a and 15b is sufficiently lower or higher than the air temperature in the living space, the air-conditioning load indoors can be securely covered. The heat medium outlet temperature of the intermediate heat exchangers 15a and 15b is controlled to be a suitable temperature for heating and cooling, respectively. For example, the target of the heat medium outlet temperature of the intermediate heat exchanger 15b for heating is specified as 50 degrees C, that for cooling being 7 degrees C. Then, according to the deviation between the detection value of the first temperature sensors 31a and 31b that detect the heat medium outlet temperature in the intermediate heat exchangers 15a and 15b and the above-mentioned target value, the control target value of the condensing temperature and/or the evaporating temperature of a refrigeration cycle side is decided using feedback control (PID control, for example) to control these temperatures.

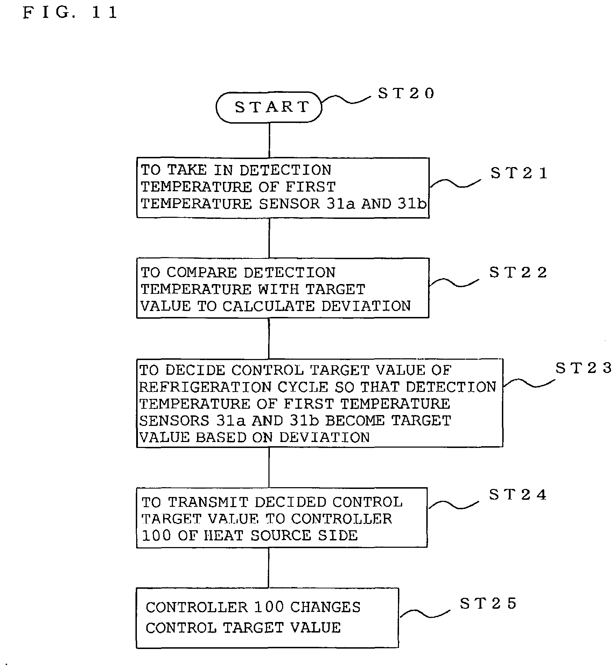

Fig. 11 is a flow chart showing an example of control that changes the above-mentioned control target value.

After processing starts (ST20), the controller 300 takes in the detection temperatures Ta1 and Ta2 of the first temperature sensors 31a and 31b (ST21). Then, the controller 300 compares the detection temperatures Ta1 of the first temperature sensor 31a with a target value (50 degrees C, for example), compares the detection temperatures Tbl of the first temperature sensor 31b with a target value (7 degrees C, for example), and calculates each deviation (ST22). Next, the controller 300 performs PID control based on the calculated deviations to calculate the control target value of the condensing temperature and/or the evaporating temperature of a refrigeration cycle side such that each detection temperature of the first temperature sensors 31a and 31b become the above-mentioned target value (ST23). Thereafter, the controller 300 transmits calculated control target values to the controller 100 (ST24) . Then, the controller 100 changes the prestored control target value of the condensing temperature and/or the evaporating temperature of the refrigeration cycle into the received control target value to control the heat source apparatus 1 based thereon (ST25).

By controlling the refrigeration circuit with the heat medium outlet temperature of the intermediate heat exchangers 15a or 15b being a control target, it is possible to securely correspond to the air-conditioning load and to perform stable operation. In addition, the heat medium inlet temperature may controlled to be constant in place of the heat medium outlet temperature.

Embodiment 2

Fig. 8 is a circuit diagram for refrigerant and heat medium of the air-conditioning apparatus according to Embodiment 2 of the present invention. The circuit of Fig. 8 adds flow meters 41a to 41d to the circuit of Fig. 3 as the flow meter of the heat medium that detects the flow amount of the heat medium flowing to the use side heat exchangers 26a to 26d.

Based on the flow amount of the heat medium measured by the flow meters 41a to 41d, the detection temperatures of the third temperature sensors 33a to 33d and the fourth temperature sensors 34a to 34d, the density and the specific heat at constant pressure of the heat medium, the air-conditioning loads in each use side heat exchanger 26a to 26d can be calculated. By adding each calculated air-conditioning load, capacity exerted by the whole use side heat exchangers 26a to 26d can be calculated. Here, such capacity calculation means is provided with the controller 300.

The controller 300 further compares the capacity exerted by the use side heat exchangers 26a to 26d with that exerted by the refrigeration cycle side to calculate the control target value of the condensing temperature and/or an evaporating temperature of a refrigeration cycle side so that the capacity to be exerted by the refrigeration cycle side approaches the capacity exerted by the use side heat exchangers 26a to 26d. The calculated control target value is transmitted to the controller 100. The controller 100 changes the prestored control target value of the condensing temperature and/or the evaporating temperature of the refrigeration cycle side into the received control target value to control the heat source apparatus 1 based thereon.

Therefore, based on the flow amount of the heat medium flowing through the use side heat exchanger, by calculating the air-conditioning load of the use side heat exchanger to control the refrigeration cycle so as to cover it, when the air-conditioning load of the use side heat exchanger is large, capacity corresponding to the air-conditioning load can be surely exerted. When the air-conditioning load is small, the temperature difference between the condensing temperature and the evaporating temperature of the refrigeration cycle can be made small, enabling the work amount in the compressor to be small and resulting in energy-saving.

The flow meters 41a to 41d have only to measure the flow amount of the heat medium flowing into the use side heat exchangers 26a to 26d and may be disposed not only at the inlet side but also at the outlet side of the use side heat exchangers 26a to 26d.

The flow amount of the heat medium flowing through the use side heat exchangers 26a to 26d may be estimated instead of being actually measured. For example, if a flow amount adjustment valve driven by such as a stepping motor is disposed in the flow path of the heat medium and the relation between the number of the control pulse and the flow amount are stored, the flow amount of the heat medium passing through the use side heat exchangers 26a to 26d can be estimated to some degree, the above-mentioned air-conditioning load calculation may be performed using the estimated value.

Although descriptions are given to the case as an example in which there are four use side heat exchangers 26a to 26d in Embodiments 1 and 2, in the present invention, the use side heat exchanger may be one, and there is no limit to the number of units.

Although descriptions are given to the case in which the pumps 21a to 21d are disposed at the inlet side of the use side heat exchangers 26a to 26d, the pumps 21a to 21d may be disposed at the outlet side thereof.

The pumps 21a to 21d operate when heating load, cooling load, or dehumidifying load occurs in any of the use side heat exchanger 26a to 26d. They are stopped when no heating load, cooling load, or dehumidifying load occurs in neither of them.

The refrigerant may be a single refrigerant such as R-22 and R-134a, a pseudo-azeotropic mixture refrigerant such as R-410A and R-404A, an azeotropic mixture refrigerant such as R-407C, a refrigerant and its mixture that is regarded to have a smaller global warming potential such as $CF_3CF=CH_2$ including a double bond in the chemical formula, or a natural refrigerant such as $CO_2$ and propane.

Although the refrigerant circuit is configured to contain an accumulator 17, a circuit having no accumulator 17 will be effective for the present invention. Although descriptions are given to the case where there are the check valves 13a to 13d, they are not an indispensable component for the present invention. The present invention can be configured by a circuit without them and the same operation and the same working effect can be achieved.

It is preferable that a fan should be attached to the heat source side heat exchanger 12 and the use side heat exchangers 26a to 26d and to promote condensation or evaporation by blowing. Although it is not limited thereto, but as for the use side heat exchangers 26a to 26d, a panel heater utilizing radiation may be employed. As for the heat source side heat exchanger 12, a water-cooling type may be employed that moves heat by water and anti-freezing liquid. Any type can be used having a structure that can release or absorb heat.

Although descriptions are given to the case where the flow path switching valves 22a to 22d and 23a to 23d, the pumps 21a to 21d are connected with each use side heat exchanger 26a to 26d on a one-by-one basis, it is not limited thereto. Each use side heat exchanger may be connected with a plurality of them. Then, the flow path switching valve and the pump connected to the same use side heat exchanger may be operated in the same way.

Although an example is given to a case where two intermediate heat exchangers 15a and 15b are provided for heating and cooling the heat medium as the intermediate heat exchanger, the number of the intermediate heat exchanger is not limited thereto. For example, when the use side heat exchanger is used only for cooling, only the intermediate heat exchanger 15b will be enough. When the use side heat exchanger is used only for heating, only the intermediate heat exchanger 15a will be enough. When there are many use side heat exchangers, the intermediate heat exchanger may be added according to the number thereof.

In the air-conditioning apparatus according to Embodiments 1 and 2, since no high-pressure refrigerant is transferred to the use side heat exchanger constituting the indoor unit, safety can be secured even if the heat exchange medium of the use side heat exchanger is leaked. By separately forming the intermediate heat exchanger, the heat source side heat exchanger, and the use side heat exchanger respectively and enabling them to be disposed at separate locations from each other, the conveying power of the heat medium can be made small. By adopting the above-mentioned each control method, responsiveness to the air-conditioning load of the use side heat exchanger is improved, enabling an operation in favor of saving-energy.

**Claims**

1. An air-conditioning apparatus, comprising:

   at least one intermediate heat exchanger (15) that exchanges heat between a refrigerant and a heat medium different from said refrigerant;
   a refrigeration cycle that connects a compressor (10), a heat source side heat exchanger (12), at least one expansion valve (16), and a refrigerant side flow path of said intermediate heat exchanger (15) via piping (4) through which said refrigerant flows; and
   a heat medium circulation circuit that connects a heat medium side flow path of said intermediate heat exchanger (15) and a use side heat exchanger (26) via piping (15) through which said heat medium circulates, wherein said heat source side heat exchanger (12), said intermediate heat exchanger (15), and said use side heat exchanger (26) are separately formed respectively, and
   a pump (21) that makes said heat medium in said heat medium circulation circuit circulate,
   **characterized in that**
   the air-conditioning apparatus further comprises:
   a flow meter that detects the flow amount of the heat medium flowed into said use side heat exchanger (26),
   capacity calculation means that calculates capacity exerted by said use side heat exchanger (26) from a flow amount of the heat medium detected by said flow meter and detection temperatures of temperature sensors (33, 34) that detect a temperature of the heat medium flowing into said use side heat exchanger (26) and a temperature of the heat medium flowed out from said use side heat exchanger, and
   control target value change means that changes a control target value of a condensing temperature and/or evaporating temperature of said refrigeration cycle based on values calculated by said capacity calculation means,
are provided.

2. The air-conditioning apparatus of claim 1, wherein

flow path switching valves (22, 23) are provided that selects either a cooled heat medium or a heated heat medium to make the same pass through the pipeline (5) connected with the inlet side and the outlet side of said use side heat exchanger (26),
a temperature sensor (33, 34) is provided at a flow path between said flow path switching valve (22) disposed at a heat medium inlet side of said use side heat exchanger (26) and said use side heat exchanger (26), and at the flow path between said flow path switching valve (23) disposed at a heat medium outlet side of said use side heat exchanger (26) and said use side heat exchanger (26), respectively, and
flow amount control means is provided that controls said pump (21) such that the difference in the detection temperatures of these two temperature sensors (33, 34) approaches a predetermined target value to control the flow amount of said heat medium flowing into said use side heat exchanger (26).

3. The air-conditioning apparatus of claim 1 or 2, wherein
ON/OFF control means is provided that operates said correspondingly installed pump (21) when receiving drive request for heating, cooling, or dehumidifying from said use side heat exchanger (26) and stops said correspondingly installed pump (21) in the case of no said drive request or at the time of thermo-off stop.

4. The air-conditioning apparatus of any of claims 1 to 3, wherein

a temperature sensor (32, 31) is provided at a heat medium inlet side flow path of said intermediate heat exchanger (15) or at a heat medium outlet side flow path of said intermediate heat exchanger (15), and control target value change means that changes a control target value of a condensing temperature and/or an evaporating temperature of said refrigeration cycle so as to make a detection temperature of said temperature sensor (32, 31) approach a predetermined target value.

5. The air-conditioning apparatus of any of claims 1 to 4, wherein:
as said intermediate heat exchanger (15), an intermediate heat exchanger (15a) for heating said heat medium and an intermediate heat exchanger (15b) for cooling said heat medium are provided.

6. The air-conditioning apparatus of any of claims 1 to 5, wherein:
a set having said use side heat exchanger (26), each of said flow path switching valves (22,23), and said pump (21) is provided in plural in parallel.

7. The air-conditioning apparatus of any of claims 1 to 6, wherein:
said intermediate heat exchanger (15) is installed outside the space to be air-conditioned by said use side heat exchanger (26) .

**Patentansprüche**

1. Klimaanlage, umfassend:

mindestens einen Zwischenwärmetauscher (15), der Wärme zwischen einem Kältemittel und einem Wärmemedium, das sich von dem Kältemittel unterscheidet, austauscht;
einen Kältekreislauf, der einen Kompressor (10), einen wärmequellenseitigen Wärmetauscher (12), mindestens ein Expansionsventil (16) und einen kältemittelseitigen Strömungsweg des Zwischenwärmetauschers (15) über eine Rohrleitung (4) verbindet, durch die das Kältemittel fließt; und
einen Wärmemedium-Zirkulationskreislauf, der einen wärmemediumsseitigen Strömungsweg des Zwischenwärmetauschers (15) und einen nutzungsseitigen Wärmetauscher (26) über eine Rohleitung (15) verbindet, durch die das Wärmemedium zirkuliert, wobei
der wärmequellenseitige Wärmetauscher (12), der Zwischenwärmetauscher (15) und der nutzungsseitige Wärmetauscher (26) jeweils separat ausgeformt sind, und
eine Pumpe (21), die das Wärmemedium in dem Wärmemedium-Zirkulationskreislauf veranlasst, zu zirkulieren,

**dadurch gekennzeichnet, dass**
die Klimaanlage ferner umfasst:

ein Strömungsmesser, der die Strömungsmenge des in den nutzungsseitigen Wärmetauscher (26) geflossenen Wärmemediums detektiert,

ein Kapazitätsberechnungsmittel, das die von dem nutzungsseitigen Wärmetauscher (26) gebrauchte Kapazität aus einer von dem Strömungsmesser detektierten Strömungsmenge des Wärmemediums und Detektionstemperaturen von Temperatursensoren (33, 34) berechnet, die eine Temperatur des in den nutzungsseitigen Wärmetauscher (26) strömenden Wärmemediums und eine Temperatur des aus dem nutzungsseitigen Wärmetauscher ausgeströmten Wärmemediums detektieren, und

ein Steuerzielwert-Änderungsmittel, das einen Steuerzielwert einer Kondensationstemperatur und/oder Verdampfungstemperatur des Kältekreislaufs auf Grundlage von Werten, die durch das Kapazitätsberechnungsmittel berechnet wurden, ändert,

werden bereitgestellt.

**2.** Klimaanlage nach Anspruch 1, wobei
Strömungswegumschaltventile (22, 23) bereitgestellt sind, die entweder ein gekühltes Wärmemedium oder ein erwärmtes Wärmemedium auswählen, um es durch die mit der Einlassseite und der Auslassseite des nutzungsseitigen Wärmetauschers (26) verbundene Rohrleitung (5) strömen zu lassen,

ein Temperatursensor (33, 34) jeweils bereitgestellt ist an einem Strömungsweg zwischen dem an einer Wärmemedium-Einlassseite des nutzungsseitigen Wärmetauschers angeordneten Strömungswegumschaltventil (22) und dem nutzungsseitigen Wärmetauscher (26), und an dem Strömungsweg zwischen dem an einer Wärmemedium-Auslassseite des nutzungsseitigen Wärmetauschers (26) angeordneten Strömungswegumschaltventil (23) und dem nutzungsseitigen Wärmetauscher (26) und

ein Strömungsmenge-Steuerungsmittel bereitgestellt ist, das die Pumpe (21) so steuert, dass der Unterschied in den Detektionstemperaturen dieser zwei Temperatursensoren (33, 34) sich einem vorgegebenen Zielwert nähert, um die Strömungsmenge des Wärmemediums, das in den nutzungsseitigen Wärmetauscher (26) fließt, zu steuern.

**3.** Klimaanlage nach Anspruch 1 oder 2, wobei
ein AN/AUS-Steuerungsmittel bereitgestellt wird, das die entsprechend installierte Pumpe (21) bedient, wenn es von dem nutzungsseitigen Wärmetauscher (26) eine Antriebsanforderung zum Wärmen, Kühlen oder Entfeuchten empfängt und die entsprechend installierte Pumpe (21) anhält, wenn keine solche Antriebsanforderung vorhanden ist oder zum Zeitpunkt des Thermo-Off-Stopps.

**4.** Klimaanlage nach einem der Ansprüche 1 bis 3, wobei
ein Temperatursensor (32, 31) an einem Wärmemedium-Einlassseite-Strömungsweg des Zwischenwärmetauschers (15) oder an einem Wärmemedium-Auslassseite-Strömungsweg des Zwischenwärmetauschers (15) bereitgestellt ist, und
ein Steuerzielwert-Änderungsmittel, das einen Steuerzielwert einer Kondensationstemperatur und/oder einer Verdampfungstemperatur des Kältekreislaufs so ändert, dass eine Detektionstemperatur des Temperatursensors (32, 31) veranlasst wird, sich einem vorgegebenem Zielwert zu nähern.

**5.** Klimaanlage nach einem der Ansprüche 1 bis 4, wobei:
als Zwischenwärmetauscher (15) ein Zwischenwärmetauscher (15a) zum Erwärmen des Wärmemediums und ein Zwischenwärmetauscher (15b) zum Kühlen des Wärmemediums bereitgestellt sind.

**6.** Klimaanlage nach einem der Ansprüche 1 bis 5, wobei:
eine Anlage, die den nutzungsseitigen Wärmetauscher (26), jedes der Strömungswegumschaltventile (22, 23) und die Pumpe (21) aufweist, mehrfach parallel bereitgestellt ist.

**7.** Klimaanlage nach einem der Ansprüche 1 bis 6, wobei:
der Zwischenwärmetauscher (15) außerhalb des durch den nutzungsseitigen Wärmetauscher (26) zu klimatisierenden Bereichs installiert ist.

**Revendications**

**1.** Conditionneur d'air, comprenant :

au moins un échangeur de chaleur intermédiaire (15) qui échange de la chaleur entre un réfrigérant et un milieu thermique différent dudit réfrigérant ;

un cycle de réfrigération qui relie un compresseur (10), un échangeur de chaleur côté source de chaleur (2), au moins un détendeur (16) et un trajet d'écoulement côté réfrigérant dudit échangeur de chaleur intermédiaire (15) via une conduite (4) à travers laquelle s'écoule ledit réfrigérant ; et

un circuit de circulation de milieu thermique qui relie un trajet d'écoulement côté milieu thermique dudit échangeur de chaleur intermédiaire (15) et un échangeur de chaleur côté utilisation (26) via une conduite (15) à travers laquelle circule ledit milieu thermique, dans lequel

ledit échangeur de chaleur côté source de chaleur (12), ledit échangeur de chaleur intermédiaire (15) et ledit échangeur de chaleur côté utilisation (26) sont respectivement formés de manière séparée, et

une pompe (21) qui fait circuler ledit milieu thermique dans ledit circuit de circulation de milieu thermique, **caractérisé en ce que**

le conditionneur d'air comprend en outre :

un débitmètre qui détecte la quantité d'écoulement du milieu thermique écoulé dans ledit échangeur de chaleur côté utilisation (26),

un moyen de calcul de capacité qui calcule la capacité exercée par ledit échangeur de chaleur côté utilisation (26) à partir d'une quantité d'écoulement du milieu de chaleur détectée par ledit débitmètre et des températures de détection de capteurs de température (33, 34) qui détectent une température du milieu thermique s'écoulant dans ledit échangeur de chaleur côté utilisation (26) et une température du milieu thermique sorti dudit échangeur de chaleur côté utilisation, et

un moyen de modification de valeur cible de commande qui modifie une valeur cible de commande d'une température de condensation et/ou d'une température d'évaporation dudit cycle de réfrigération sur la base de valeurs calculées par ledit moyen de calcul de capacité.

2. Conditionneur d'air selon la revendication 1, dans lequel

des vannes de commutation de trajet d'écoulement (22, 23) sont prévues qui sélectionnent soit un milieu thermique refroidi, soit un milieu thermique chauffé pour le faire passer à travers la conduite (5) reliée au côté d'entrée et au côté de sortie dudit échangeur de chaleur côté utilisation (26),

un capteur de température (33, 34) est prévu au niveau d'un trajet d'écoulement entre ladite vanne de commutation de trajet d'écoulement (22) disposée au niveau d'un côté d'entrée de milieu thermique dudit échangeur de chaleur côté utilisation (26) et ledit échangeur de chaleur côté utilisation (26), et au niveau du trajet d'écoulement entre ladite vanne de commutation de trajet d'écoulement (23) disposée au niveau d'un côté de sortie de milieu thermique dudit échangeur de chaleur côté utilisation (26) et ledit échangeur de chaleur côté utilisation (26), respectivement, et

un moyen de commande de quantité d'écoulement est prévu qui commande ladite pompe (21) de telle sorte que la différence dans les températures de détection de ces deux capteurs de température (33, 34) approche une valeur cible prédéterminée pour commander la quantité d'écoulement dudit milieu thermique s'écoulant dans ledit échangeur de chaleur côté utilisation (26).

3. Conditionneur d'air selon la revendication 1 ou 2, dans lequel

un moyen de commande marche/arrêt est prévu qui actionne ladite pompe (21) installée en correspondance lors de la réception d'une demande d'activation pour chauffage, refroidissement ou déshumidification depuis ledit échangeur de chaleur côté utilisation (26) et arrête ladite pompe (21) installée en correspondance en l'absence de ladite demande d'activation ou au moment de l'arrêt thermique.

4. Conditionneur d'air selon l'une quelconque des revendications 1 à 3, dans lequel

un capteur de température (32, 31) est prévu au niveau d'un trajet d'écoulement côté entrée de milieu thermique dudit échangeur de chaleur intermédiaire (15) ou au niveau d'un trajet d'écoulement côté sortie de milieu thermique dudit échangeur de chaleur intermédiaire (15), et

un moyen de modification de valeur cible de commande qui modifie une valeur cible de commande d'une température de condensation et/ou d'une température d'évaporation dudit cycle de réfrigération de sorte à ce qu'une température de détection dudit capteur de température (32, 31) approche une valeur cible prédéterminée.

5. Conditionneur d'air selon l'une quelconque des revendications 1 à 4, dans lequel :

en tant que dit échangeur de chaleur intermédiaire (15), un échangeur de chaleur intermédiaire (15a) pour chauffer ledit milieu thermique et un échangeur de chaleur intermédiaire (15b) pour refroidir ledit milieu thermique sont prévus.

6. Conditionneur d'air selon l'une quelconque des revendications 1 à 5, dans lequel

un ensemble comprenant ledit échangeur de chaleur côté utilisation (26), chacune desdites vannes de commutation de trajet d'écoulement (22, 23) et ladite pompe (21) est prévu en pluralité en parallèle.

7. Conditionneur d'air selon l'une quelconque des revendications 1 à 6, dans lequel :
   ledit échangeur de chaleur intermédiaire (15) est installé à l'extérieur de l'espace dont l'air doit être conditionné par ledit échangeur de chaleur côté utilisation (26).

FIG. 1

FIG. 2

FIG. 3

FIG. 4

FIG. 5

FIG. 6

FIG. 7

FIG. 8

FIG. 9

```
                    ,—ST0
         ┌─────────────┐
         │   START     │        ,—ST1
         └─────────────┘
                │
    ┌───────────────────────────────────┐
    │ TO MEASURE DETECTION TEMPERATURE T1│
    │ OF THIRD TEMPERATURE SENSOR 33a TO │
    │ 33d AND DETECTION TEMPERATURE T2 OF│
    │ FOURTH TEMPERATURE SENSOR 34a TO 34d│
    └───────────────────────────────────┘
                │                 ,—ST2
              ╱   ╲           N o
          ╱               ╲
      ╱  HEATING OPERATION?  ╲──────────────┐
          ╲               ╱                 │
              ╲   ╱       ST3                │      ST4
           Y e s     ,—                     │   ,—
    ┌─────────────────────┐      ┌─────────────────────┐
    │   ΔTr=T1−T2          │      │   ΔTr=T2−T1          │
    └─────────────────────┘      └─────────────────────┘
                │                         │
                │◄────────────────────────┘
                │            ST5
              ╱   ╲       ,—
          ╱               ╲         <−Trs
      ╱     Tmr−ΔTr ?        ╲──────────────────────┐
          ╲               ╱                         │
              ╲   ╱      ST6                        │      ST7
           >Trs      ,—                             │   ,—
    ┌─────────────────────────────┐   ┌──────────────────────────────┐
    │ TO DECREASE ROTATION SPEED  │   │ TO INCREASE ROTATION SPEED   │
    │ (DISCAHRGE CAPACITY) OF PUMPS│  │ (DISCAHRGE CAPACITY) OF PUMPS │
    │ 21a TO 21d                  │   │ 21a TO 21d                   │
    │ → TO DECREASE FLOW          │   │ → TO INCREASE FLOW AMOUNT TO BE│
    │ AMOUNT TO BE FLOWED INTO USE│   │ FLOWED INTO USE SIDE HEAT     │
    │ SIDE HEAT EXCHANGER 26a TO 26d│ │ EXCHANGER 26a TO 26d          │
    └─────────────────────────────┘   └──────────────────────────────┘
                │                         │
                │◄────────────────────────┘
                │            ST8
         ┌─────────────┐  ,—
         │  Return     │
         └─────────────┘
```

FIG. 10

START — GT0

n ← 1 — GT1

GT4

DOSE AIR-CONDITIONING LOAD EXIST? — GT2

THERMO-OFF AT STOP/BLOWING OR HEATING/COOLING/DEHUMI-DIFYING

n = n + 1 — GT4

THERMO-ON AT HEATING/ COOLING/DEHUMIDIFYING

TO OPERATE PUMP 21 CORRESPONDING TO INDOOR UNIT NUMBER n — GT3

TO OPERATE PUMP 21 CORRESPONDING TO INDOOR UNIT NUMBER n — GT4

n ? — GT5

< MAXIMUM VALUE

= MAXIMUM VALUE

Return — GT7

FIG. 11

```
              ( START ) ~~ ST20

    ┌────────────────────────────┐
    │ TO TAKE IN DETECTION       │ ~~ ST21
    │ TEMPERATURE OF FIRST       │
    │ TEMPERATURE SENSOR 31a AND 31b │
    └────────────────────────────┘

    ┌────────────────────────────┐
    │ TO COMPARE DETECTION       │ ~~ ST22
    │ TEMPERATURE WITH TARGET    │
    │ VALUE TO CALCULATE DEVIATION │
    └────────────────────────────┘

    ┌──────────────────────────────────┐
    │ TO DECIDE CONTROL TARGET VALUE OF │ ~~ ST23
    │ REFRIGERATION CYCLE SO THAT DETECTION │
    │ TEMPERATURE OF FIRST TEMPERATURE  │
    │ SENSORS 31a AND 31b BECOME TARGET │
    │ VALUE BASED ON DEVIATION          │
    └──────────────────────────────────┘

    ┌────────────────────────────┐
    │ TO TRANSMIT DECIDED CONTROL │ ~~ ST24
    │ TARGET VALUE TO CONTROLLER  │
    │ 100 OF HEAT SOURCE SIDE     │
    └────────────────────────────┘

    ┌────────────────────────────┐
    │ CONTROLLER 100 CHANGES     │ ~~ ST25
    │ CONTROL TARGET VALUE       │
    └────────────────────────────┘
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003343936 A